# EUROPEAN PATENT APPLICATION

(11) **EP 4 810 563 A1**
(43) Date of publication of application: **23.09.2026**
(21) Application number: 24891701.5
(22) Date of filing: 05.11.2024
(51) Int. Cl.: C08L 23/14, C08L 23/08, C08L 51/06, C08L 23/06

(54) **POLYOLEFIN RESIN COMPOSITION AND ARTICLE PRODUCED THEREFROM**

(30) Priority: 16.11.2023 KR 20230159047
(71) Applicant: LOTTE CHEMICAL CORPORATION, Seoul 05551 (KR)
(72) Inventor: LEE, Joon Hee, Uiwiang-si Gyeonggi-do 16073 (KR); HONG, Sang Hyun, Uiwiang-si Gyeonggi-do 16073 (KR); BAN, Kyun Ha, Uiwiang-si Gyeonggi-do 16073 (KR)
(74) Representative: Germain Maureau
(86) International application number: PCT/KR2024/017284
(87) International publication number: WO 2025/105754

(57) **Abstract**

A polyolefin resin composition of the present invention is characterized by comprising: about 100 parts by weight of a base material including about 65 to about 90 wt% of a propylene-ethylene-1-butene copolymer, about 5 to about 15 wt% of an ethylene-propylene elastomer, and about 5 to about 20 wt% of a propylene-ethylene elastomer; about 0.1 to about 10 parts by weight of maleic anhydride grafted polypropylene; and about 5 to about 15 parts by weight of a polyethylene resin. The polyolefin resin composition has excellent adhesive strength with respect to polar substrates (aluminum and the like), as well as excellent heat resistance, electrolyte resistance, moldability, and the like.

## Description

### [Technical Field]

The present invention relates to a polyolefin resin composition and a molded article produced therefrom. More particularly, the present invention relates to a polyolefin resin composition having good properties in terms of adhesive strength to polar substrates (such as aluminum), heat resistance, electrolyte resistance, moldability, and the like, and a molded article produced therefrom.

### [Background Art]

Multilayer laminates are widely used as packaging materials for products that require high-quality maintenance, such as food, pharmaceuticals, and electronic devices. A laminate used for this purpose generally comprises a multilayer structure including a polar substrate layer having good barrier properties (barrier properties against gases such as oxygen) and a non-polar polyolefin-based resin layer having good moisture resistance and chemical resistance.

Among polyolefin-based resins, polypropylene resins are widely used as thermoplastic molding materials due to good heat resistance, chemical resistance, and rigidity. However, they are typically modified with acid to exhibit adhesion to polar substrate layers. In addition, an elastomer is commonly blended with the polypropylene resin to impart flexibility and wettability, thereby improving adhesive strength of the polypropylene resin. Furthermore, since polypropylene resins have insufficient gas barrier properties, they are generally used in the form of a multilayer laminate with a polar material to compensate for such insufficient barrier properties. However, since polypropylene resins are non-polar, they exhibit poor adhesion to polar materials having good gas barrier properties, such as polyamide resins, ethylene-vinyl alcohol copolymers, and metals.

To address these issues, acid-modified polypropylene prepared by modifying a polypropylene resin with an unsaturated carboxylic acid or a derivative thereof has been widely used in the prior art. However, the use of such acid-modified polypropylene alone is limited since it lacks flexibility and wettability. Accordingly, when used as an adhesive resin, the acid-modified polypropylene is typically blended with a polypropylene resin and an elastomer component. To obtain a packaging material that exhibits good adhesion (especially at low heat levels) and whitening resistance and is applicable to molding methods such as co-extrusion, layered coating, and lamination, studies have been conducted on incorporating 40 wt% or more of an amorphous elastomer. However, such high amorphous elastomer content can disrupt the overall crystallinity of a resulting composition, resulting in significant deterioration in thermal stability and chemical resistance of the composition.

Therefore, there is a need for a polyolefin resin composition having good properties in terms of adhesive strength to polar substrates (such as aluminum), heat resistance, electrolyte resistance, moldability, and the like.

The background art of the present invention is disclosed in Japanese Unexamined Patent Publication No. Hei 9-111069, Japanese Unexamined Patent Publication No. Hei 4-300933, Korean Patent Registration No. 10-2409543, and the like.

### [Disclosure]

### [Technical Problem]

It is one object of the present invention to provide a polyolefin resin composition having good properties in terms of adhesive strength to polar substrates (such as aluminum), heat resistance, electrolyte resistance, moldability, and the like.

It is another object of the present invention to provide a molded article formed of the polyolefin resin composition.

The above and other objects of the present invention can be achieved by embodiments of the present invention described below.

### [Technical Solution]

1. One aspect of the present invention relates to a polyolefin resin composition. The polyolefin resin composition comprises: about 100 parts by weight of a base material comprising about 65 wt% to about 90 wt% of a propylene-ethylene-1-butene copolymer, about 5 wt% to about 15 wt% of an ethylene-propylene elastomer, and about 5 wt% to about 20 wt% of a propylene-ethylene elastomer; about 0.1 to about 10 parts by weight of a maleic anhydride-grafted polypropylene; and about 5 to about 15 parts by weight of a polyethylene resin.
2. In embodiment 1, the propylene-ethylene-1-butene copolymer may be a propylene-ethylene-1-butene random copolymer comprising about 85 mol% to about 98 mol% of a propylene-derived component, about 1 mol% to about 7 mol% of an ethylene-derived component, and about 1 mol% to about 8 mol% of a 1-butene-derived component.
3. In embodiment 1 or 2, the propylene-ethylene-1-butene copolymer may have a melt-flow index of about 0.1 g/10 min to about 20 g/10 min, as measured at 230°C under a load of 2.16 kg in accordance with ASTM D1238.
4. In embodiments 1 to 3, the ethylene-propylene elastomer may comprise about 65 wt% to about 85 wt% of an ethylene-derived component and about 15 wt% to about 35 wt% of a propylene-derived component.
5. In embodiments 1 to 4, the ethylene-propylene elastomer may have a melt-flow index of about 0.1 g/10 min to about 3 g/10 min, as measured at 190°C under a load of 2.16 kg in accordance with ASTM D1238.
6. In embodiments 1 to 5, the propylene-ethylene elastomer may comprise about 75 wt% to about 95 wt% of a propylene-derived component and about 5 wt% to about 25 wt% of an ethylene-derived component.
7. In embodiments 1 to 6, the propylene-ethylene elastomer may have a melt-flow index of about 5 g/10 min to about 15 g/10 min, as measured at 230°C under a load of 2.16 kg in accordance with ASTM D1238.
8. In embodiments 1 to 7, the maleic anhydride-grafted polypropylene may comprise about 0.5 wt% to about 5 wt% of a maleic anhydride-derived component.
9. In embodiments 1 to 8, the polyethylene resin may comprise at least one of low-density polyethylene (LDPE), linear low-density polyethylene (LLDPE), medium-density polyethylene (MDPE), or high-density polyethylene (HDPE).
10. In embodiments 1 to 9, a weight ratio of the ethylene-propylene elastomer to the propylene-ethylene elastomer may range from about 1:0.9 to about 1:2.
11. In embodiments 1 to 10, the polyolefin resin composition may have an adhesive strength (peel strength) of about 18 N/15 mm to about 25 N/15 mm, as measured on a specimen through a procedure, in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×15 mm (length×width) and peeling the aluminum film and the layer of the polypropylene resin at a rate of 50 mm/min in accordance with ASTM D1876 (T-peel test).
12. In embodiments 1 to 11, the polyolefin resin composition may have an adhesive strength (peel strength) of about 11 N/15 mm to about 24 N/15 mm, as measured on a specimen through a procedure in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×25 mm (length×width), dipping the specimen in an organic electrolyte solution (1 M LiPF6 (EC:DMC:DEC = 1:1:1)) at 85°C for 24 hours, trimming both sides of the specimen to prepare a test piece with a length of 100 mm and a width of 15 mm, and peeling the aluminum film and the layer of the polypropylene resin at a rate of 50 mm/min in accordance with ASTM D1876.
13. In embodiments 1 to 12, the polyolefin resin composition may have a melt-flow index of about 0.1 g/10 min to about 15 g/10 min, as measured at 230°C under a load of 2.16 kg in accordance with ASTM D1238.
14. Another aspect of the present invention relates to a molded article. The molded article is formed of the polyolefin resin composition according to embodiments 1 to 13.

### [Advantageous Effects]

Embodiments of the present invention provide a polyolefin resin composition having good properties in terms of adhesive strength to polar substrates (such as aluminum), heat resistance, electrolyte resistance, moldability, and the like, and a molded article formed of the same.

### [Best Mode]

Hereinafter, embodiments of the present invention will be described in detail.

A polyolefin resin composition according to the present invention comprises: (A) propylene-ethylene-1-butene copolymer; (B) ethylene-propylene elastomer; (C) propylene-ethylene elastomer; (D) maleic anhydride-grafted polypropylene; and (E) polyethylene resin.

As used herein to represent a specific numerical range, "a to b" is defined as "≥a and ≤b".

### (A) Propylene-ethylene-1-butene copolymer

The propylene-ethylene-1-butene copolymer according to one embodiment of the present invention serves to improve properties of the polyolefin resin composition, such as adhesive strength to polar substrates (such as aluminum), heat resistance, electrolyte resistance, and moldability, and the like, when used in combination with the ethylene-propylene elastomer, the propylene-ethylene elastomer, the maleic anhydride-grafted polypropylene, and the polyethylene resin, and may include any propylene-ethylene-1-butene copolymer used in typical thermoplastic resin compositions.

In some embodiments, the propylene-ethylene-1-butene copolymer may be a propylene-ethylene-1-butene random copolymer comprising: about 85 mol% to about 98 mol%, for example, about 90 mol% to about 95 mol%, of a propylene-derived component; about 1 mol% to about 7 mol%, for example, about 2 mol% to about 5 mol%, of an ethylene-derived component; and about 1 mol% to about 8 mol%, for example, about 3 mol% to about 5 mol%, of a 1-butene-derived component. Within these ranges, the polyolefin resin composition can have good properties in terms of mechanical performance, moldability, and the like.

In some embodiments, the propylene-ethylene-1-butene copolymer may have a melting point (Tm) of about 125°C to about 155°C, for example, about 130°C to about 150°C, as measured using a differential scanning calorimeter (DSC), without being limited thereto. Within this range, the polyolefin resin composition can have good properties in terms of mechanical properties, moldability, and the like.

In some embodiments, the propylene-ethylene-1-butene copolymer may have a melt-flow index of about 0.1 g/10 min to about 20 g/10 min, for example, about 1 g/10 min to about 15 g/10 min, as measured at 230°C under a load of 2.16 kg in accordance with ASTM D1238. Within this range, the polyolefin resin composition can have good properties in terms of mechanical properties, moldability, and the like.

In some embodiments, the propylene-ethylene-1-butene copolymer may be present in an amount of about 65 wt% to about 90 wt%, for example, about 70 wt% to about 85 wt%, specifically about 73 wt% to about 82 wt%, based on the total weight of a base material comprising the propylene-ethylene-1-butene copolymer, the ethylene-propylene elastomer, and the propylene-ethylene elastomer. If the content of the propylene-ethylene-1-butene copolymer is less than about 65 wt% based on the total weight of the base material, the polyolefin resin composition can have poor properties in terms of adhesive strength to polar substrates (such as aluminum), heat resistance, electrolyte resistance, moldability, and the like, whereas, if the content of the propylene-ethylene-1-butene copolymer exceeds about 90 wt% based on the total weight of the base material, the polyolefin resin composition can have poor properties in terms of adhesive strength to polar substrates (such as aluminum), heat resistance, electrolyte resistance, and the like.

### (B) Ethylene-propylene elastomer

The ethylene-propylene elastomer according to one embodiment of the present invention serves to improve properties of the polyolefin resin composition, such as adhesive strength to polar substrates (such as aluminum), heat resistance, electrolyte resistance, moldability, and the like, when used in combination with the propylene-ethylene-1-butene copolymer, the propylene-ethylene elastomer, the maleic anhydride-grafted polypropylene, and the polyethylene resin, and may include any ethylene-propylene elastomer used in typical thermoplastic resin compositions.

In some embodiments, the ethylene-propylene elastomer may comprise: about 65 wt% to about 85 wt%, for example, about 70 wt% to about 80 wt%, of an ethylene-derived component; and about 15 wt% to about 35 wt%, for example, about 20 wt% to about 30 wt%, of a propylene-derived component. Within these ranges, the polyolefin resin composition can have good properties in terms of mechanical properties, moldability, adhesive strength to polar substrates (such as aluminum), and the like.

In one embodiment, the ethylene-propylene elastomer may have a melt-flow index of about 0.1 g/10 min to about 3 g/10 min, for example, about 0.5 g/10 min to about 2 g/10 min, as measured at 190°C under a load of 2.16 kg in accordance with ASTM D1238. Within this range, the polyolefin resin composition can have good properties in terms of mechanical properties, moldability, and adhesive strength to polar substrates (such as aluminum).

In some embodiments, the ethylene-propylene elastomer may be present in an amount of about 5 wt% to about 15 wt%, for example, about 7 wt% to about 13 wt%, and for example, about 8 wt% to about 12 wt%, based on the total weight of the base material. If the content of the ethylene-propylene elastomer is less than about 5 wt% based on the total weight of the base material, the polyolefin resin composition can have poor properties in terms of adhesive strength to polar substrates (such as aluminum), heat resistance, electrolyte resistance, and the like, whereas, if the content of the ethylene-propylene elastomer exceeds about 15 wt% based on the total weight of the base material, the polyolefin resin composition can have poor properties in terms of adhesive strength to polar substrates (such as aluminum), heat resistance, electrolyte resistance, moldability, and the like.

### (C) Propylene-ethylene elastomer

The propylene-ethylene elastomer according to one embodiment of the present invention serves to improve properties of the polyolefin resin composition, such as adhesive strength to polar substrates (such as aluminum), heat resistance, electrolyte resistance, moldability, and the like, when used in combination with the propylene-ethylene-1-butene copolymer, the ethylene-propylene elastomer, the maleic anhydride-grafted polypropylene, and the polyethylene resin, and may include any propylene-ethylene elastomer used in typical thermoplastic resin compositions.

In some embodiments, the propylene-ethylene elastomer may comprise: about 75 wt% to about 95 wt%, for example, about 85 wt% to about 95 wt%, of a propylene-derived component; and about 5 wt% to about 25 wt%, for example, about 5 wt% to about 15 wt%, of an ethylene-derived component. Within these ranges, the polyolefin resin composition can have good properties in terms of adhesive strength to polar substrates (such as aluminum), electrolyte resistance, and the like.

In some embodiments, the propylene-ethylene elastomer may have a melt-flow index of about 5 g/10 min to about 15 g/10 min, for example, about 6 g/10 min to about 10 g/10 min, as measured at 230°C under a load of 2.16 kg in accordance with ASTM D1238. Within this range, the polyolefin resin composition can have good properties in terms of adhesive strength to polar substrates (such as aluminum), electrolyte resistance, moldability, and the like.

In some embodiments, the propylene-ethylene elastomer may be present in an amount of about 5 wt% to about 20 wt%, for example, about 7 wt% to about 18 wt%, specifically about 8 wt% to about 17.5 wt%, based on the total weight of the base material. If the content of the propylene-ethylene elastomer is less than about 5 wt% based on the total weight of the base material, the polyolefin resin composition can have poor properties in terms of adhesive strength to polar substrates (such as aluminum), heat resistance, electrolyte resistance, and the like, whereas, if the content of the propylene-ethylene elastomer exceeds about 20 wt% based on the total weight of the base material, the polyolefin resin composition can have poor properties in terms of adhesive strength to polar substrates (such as aluminum), heat resistance, electrolyte resistance, moldability, and the like.

In some embodiments, a weight ratio of the ethylene-propylene elastomer to the propylene-ethylene elastomer may range from about 1:0.9 to about 1:2, for example, about 1:1 to about 1:1.9. Within this range, the polyolefin resin composition can have good properties in terms of adhesive strength to polar substrates, electrolyte resistance, and the like.

### (D) Maleic anhydride-grafted polypropylene

The maleic anhydride-grafted polypropylene according to one embodiment of the present invention serves to improve properties of the polyolefin resin composition, such as adhesive strength to polar substrates (such as aluminum), heat resistance, electrolyte resistance, moldability, and the like, when used in combination with the propylene-ethylene-1-butene copolymer, the propylene-ethylene elastomer, the ethylene-propylene elastomer, and the polyethylene resin.

In some embodiments, the maleic anhydride-grafted polypropylene may comprise: about 0.5 wt% to about 5 wt%, for example, about 1 wt% to about 3 wt%, of a maleic anhydride-derived component. Within this range, the polyolefin resin composition can have good properties in terms of adhesive strength to polar substrates (such as aluminum) and the like.

In some embodiments, the maleic anhydride-grafted polypropylene may have a weight average molecular weight of about 30,000 g/mol to about 60,000 g/mol, for example, about 40,000 g/mol to about 55,000 g/mol, as measured by gel permeation chromatography (GPC). Within this range, the maleic anhydride-grafted polypropylene can prevent contamination on an adherend while enhancing properties of the polyolefin resin composition, such as adhesive strength to polar substrates (such as aluminum) and the like.

In some embodiments, the maleic anhydride-grafted polypropylene may be present in an amount of about 0.1 to about 10 parts by weight, for example, about 4 to about 8 parts by weight, relative to about 100 parts by weight of the base material. If the content of the maleic anhydride-grafted polypropylene is less than about 0.1 parts by weight relative to about 100 parts by weight of the base material, the polyolefin resin composition can have poor properties in terms of adhesive strength to polar substrates (such as aluminum), heat resistance, electrolyte resistance, and the like, whereas, if the content of the maleic anhydride-grafted polypropylene exceeds about 10 parts by weight relative to about 100 parts by weight of the base material, the polyolefin resin composition can have poor properties in terms of adhesive strength to polar substrates (such as aluminum), heat resistance, electrolyte resistance, moldability, adhesion uniformity, and the like, while causing increase in contamination of an adherend.

### (E) Polyethylene resin

The polyethylene resin according to one embodiment of the present invention serves to improve properties of the polyolefin resin composition, such as adhesive strength to polar substrates (such as aluminum), heat resistance, electrolyte resistance, moldability, and the like, when used in combination with the propylene-ethylene-1-butene copolymer, the propylene-ethylene elastomer, the ethylene-propylene elastomer, and the maleic anhydride-grafted polypropylene, and may include any polyethylene resin used in typical thermoplastic resin compositions.

In some embodiments, the polyethylene resin may include at least one of low-density polyethylene (LDPE), linear low-density polyethylene (LLDPE), medium-density polyethylene (MDPE), or high-density polyethylene (HDPE).

In some embodiments, the polyethylene resin may have a melt-flow index of about 1 g/10 min to about 10 g/10 min, for example, about 2 g/10 min to about 9 g/10 min, as measured at 190°C under a load of 2.16 kg in accordance with ASTM D1238. Within this range, the polyolefin resin composition can have good properties in terms of adhesive strength to polar substrates (such as aluminum), moldability, and the like.

In some embodiments, the polyethylene resin may be present in an amount of about 5 to about 15 parts by weight, for example, about 7 to about 12 parts by weight, based on the total weight of the base material. If the content of the polyethylene resin is less than about 5 parts by weight based on the total weight of the base material, the polyolefin resin composition can have poor properties in terms of adhesive strength to polar substrates (such as aluminum), heat resistance, electrolyte resistance, moldability, and the like, whereas, if the content of the polyethylene resin exceeds about 15 parts by weight based on the total weight of the base material, the polyolefin resin composition can have poor properties in terms of adhesive strength to polar substrates (such as aluminum), heat resistance, electrolyte resistance, and the like.

The polyolefin resin composition according to one embodiment of the present invention may further comprise additives used in typical polyolefin resin compositions. Examples of the additive may include antioxidants, heat stabilizers, UV stabilizers, flame retardants, anti-dripping agents, lubricants, release agents, nucleating agents, antistatic agents, pigments, dyes, mixtures thereof, and the like. The additives may be optionally present in an amount of about 0.001 to about 40 parts by weight, for example, about 0.1 to about 10 parts by weight, relative to about 100 parts by weight of the base material.

The polyolefin resin composition according to one embodiment of the present invention may be prepared in pellet form by mixing the aforementioned components, followed by melt extrusion in a typical twin-screw extruder at about 170°C to about 240°C, for example, about 190°C to about 230°C.

In one embodiment, the polyolefin resin composition may have an adhesive strength (peel strength) of about 18 N/15 mm to about 25 N/15 mm, for example, about 18.5 N/15 mm to about 24 N/15 mm, as measured on a specimen through a procedure in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×15 mm (length×width) and peeling the aluminum film and the layer of the polypropylene resin at a rate of 50 mm/min in accordance with ASTM D1876 (T-peel test).

In some embodiments, the polyolefin resin composition may have an adhesive strength (peel strength) of about 11 N/15 mm to about 24 N/15 mm, for example, about 13 N/15 mm to about 22 N/15 mm, as measured on a specimen through a procedure in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×25 mm (length×width), dipping the specimen in an organic electrolyte solution (1 M LiPF₆ (EC:DMC:DEC = 1:1:1)) at 85°C for 24 hours, trimming both sides of the specimen to prepare a test piece with a length of 100 mm and a width of 15 mm, and peeling the aluminum film and the layer of the polypropylene resin at a rate of 50 mm/min in accordance with ASTM D1876.

In some embodiments, the polyolefin resin composition may have a melt-flow index of about 0.1 g/10 min to about 15 g/10 min, for example, about 5 g/10 min to about 12 g/10 min, as measured at 230°C under a load of 2.16 kg in accordance with ASTM D1238.

A molded article according to the present invention is formed of the polyolefin resin composition. The polyolefin resin composition may be prepared in pellet form. The prepared pellets may be produced into various molded articles (products) by various molding methods, such as film forming, injection molding, extrusion, vacuum molding, casting, and the like. Such molding methods are well known to a person having ordinary skill in the art to which the present invention pertains. The molded article is useful as an adhesive film or sheet for bonding to polar substrates due to good properties thereof in terms of adhesive strength to polar substrates (such as aluminum), heat resistance, electrolyte resistance, moldability, and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows:
(A1) A propylene-ethylene-1-butene random copolymer (propylene-derived component content: about 91 mol%; ethylene-derived component content: about 4 mol%; 1-butene-derived component content: about 5 mol%; melt-flow index (230°C/2.16 kg): about 7 g/10 min, manufacturer: Lotte Chemical Co., Ltd.) was used.
(A2) A polypropylene resin (propylene-ethylene random copolymer; melt-flow index (230°C/2.16 kg): about 8 g/10 min; Lotte Chemical Co., Ltd.) was used.

### (B) Ethylene-propylene elastomer

An ethylene-propylene elastomer (content of ethylene-derived component: about 75 wt%; melt-flow index (190°C/2.16 kg): about 1 g/10 min, manufacturer: ExxonMobil Co., Ltd.) was used.

### (C) Propylene-ethylene elastomer

A propylene-ethylene elastomer (propylene-derived component content: about 90 wt%; melt-flow index (230°C/2.16 kg): about 8 g/10 min, manufacturer: ExxonMobil Co., Ltd.) was used.

### (D) Maleic anhydride-grafted polypropylene

A maleic anhydride-grafted polypropylene (maleic anhydride-derived component content: about 3 wt%; weight average molecular weight: about 53,000 g/mol; density: about 0.90 g/cm³, manufacturer: Lotte Chemical Co., Ltd.) was used.

### (E) Polyethylene resin

A low-density polyethylene (LDPE) (melt-flow index (190°C/2.16 kg): about 7 g/10 min, manufacturer: Lotte Chemical Co., Ltd.) was used.

### Examples 1 to 4 and Comparative Examples 1 to 7

The aforementioned components were mixed in amounts as listed in Tables 1 and 2, followed by extrusion at about 190°C, thereby preparing a polyolefin resin composition in pellet form. Here, extrusion was performed using a twin-screw extruder (L/D: 40, diameter: 19 mm). The prepared pellets were dried at 80°C for 2 hours or more and then prepared into specimens using a multilayer film forming machine. The prepared specimens were evaluated as to the following properties. Results are shown in Tables 1 and 2.

### Property evaluation

(1) Adhesive strength to polar substrate: Adhesive strength (peel strength, unit: N/15 mm) was measured on a specimen through a procedure in which the specimen was prepared by forming a bilayer film composed of a layer of the polyolefin resin composition and a layer of a polypropylene resin (product name: SFC550, manufacturer: Lotte Chemical Co., Ltd.) using a multilayer film forming machine and attaching the bilayer film onto a nylon-attached aluminum film (thickness: about 113 µm) with the layer of the polyolefin resin composition adjoining the aluminum film, followed by heating to 200°C for 5 minutes, and in which the adhesive strength was measured by cutting the specimen to a size of 100 mm×15 mm (length×width) and peeling the aluminum film and the layer of the polypropylene resin at a rate of 50 mm/min using a universal testing machine (UTM) (model name: Z020, manufacturer: ZwickRoell GmbH) in accordance with ASTM D1876 (T-peel test).

Heat resistance and electrolyte resistance: Adhesive strength (peel strength, unit: N/15 mm) was measured on a specimen through a procedure in which the specimen was prepared by forming a bilayer film composed of a layer of the polyolefin resin composition and a layer of a polypropylene resin (product name: SFC550, manufacturer: Lotte Chemical Co., Ltd.) using a multilayer film forming machine and attaching the bilayer film onto a nylon-attached aluminum film (thickness: about 113 µm) with the layer of the polyolefin resin composition adjoining the aluminum film, followed by heating to 200°C for 5 minutes, and in which the adhesive strength was measured by cutting the specimen to a size of 100 mm×25 mm (length×width), dipping the specimen in an organic electrolyte solution (1 M LiPF₆ (EC:DMC:DEC = 1:1:1)) at 85°C for 24 hours, trimming both sides of the specimen to prepare a test piece with a length of 100 mm and a width of 15 mm, and peeling the aluminum film and the layer of the polypropylene resin at a rate of 50 mm/min using a universal testing machine (UTM) (model name: Z020, manufacturer: ZwickRoell GmbH) in accordance with ASTM D1876 (T-peel test).

(3) Moldability: Melt-flow index (unit: g/10 min) was measured on a specimen in pellet form at 230°C under a load of 2.16 kg in accordance with ASTM D1238.

(4) Film formability: A bilayer film composed of a layer of the polyolefin resin composition and a layer of a polypropylene resin (product name: SFC550, manufacturer: Lotte Chemical Co., Ltd.) was prepared using a multilayer film forming machine and then cut to a size of 100 mm×100 mm (length×width). Then, the presence of holes on the surfaces of three film samples thus prepared and the presence of wrinkles at the edges of the film samples were visually inspected. (⊚: No holes and/or wrinkles; ○: Average number of holes and/or wrinkles was 1 to 2; ×: Average number of holes and/or wrinkles was 3 or more)"

**Table 1**

| | Example | | | |
|---|---|---|---|---|
| | 1 | 2 | 3 | 4 |
| (A1) (wt%) | 73.6 | 77 | 81.4 | 77.2 |
| (A2) (wt%) | - | - | - | - |
| (B) (wt%) | 9.2 | 9.2 | 9.3 | 11.4 |
| (C) (wt%) | 17.2 | 13.8 | 9.3 | 11.4 |
| (D) (parts by weight) | 5.7 | 5.7 | 5.8 | 5.7 |
| (E) (parts by weight) | 9.2 | 9.2 | 10.5 | 7.9 |
| Adhesive strength (N/15 mm) | 23.5 | 20.2 | 18.5 | 19.3 |
| Adhesive strength after dipping in organic electrolyte solution at 85°C (N/15 mm) | 21.1 | 15.7 | 13.1 | 14.5 |
| Melt-flow index (g/10 min) | 10.0 | 11.5 | 9.8 | 10.9 |
| Film formability | ⊚ | ⊚ | ⊚ | ⊚ |

| | | | | |
|---|---|---|---|---|
| * Parts by weight: Parts by weight relative to 100 parts by weight of the base material (A+B+C) | | | | |

**Table 2**

| | Comparative Example | | | | | | |
|---|---|---|---|---|---|---|---|
| | 1 | 2 | 3 | 4 | 5 | 6 | 7 |
| (A1) (wt%) | 60 | 95 | - | 77 | 77 | 77 | 77 |
| (A2) (wt%) | - | - | 77 | - | - | - | - |
| (B) (wt%) | 16 | 2 | 9.2 | 9.2 | 9.2 | 9.2 | 9.2 |
| (C) (wt%) | 24 | 3 | 13.8 | 13.8 | 13.8 | 13.8 | 13.8 |
| (D) (parts by weight) | 5.7 | 5.7 | 5.7 | 0.05 | 12 | 5.7 | 5.7 |
| (E) (parts by weight) | 9.2 | 9.2 | 9.2 | 9.2 | 9.2 | 3 | 17 |
| Adhesive strength (N/15 mm) | 8.6 | 5.3 | 12.1 | No adhesion | 6.4 | 17.8 | 16.3 |
| Adhesive strength after dipping in organic electrolyte solution at 85°C (N/15 mm) | 3.1 | 1.2 | 9.8 | No adhesion | 2.1 | 9.4 | 10.5 |
| Melt-flow index (g/10 | 8.8 | 9.5 | 11.3 | 11.5 | 13.1 | 9.7 | 12.6 |
| min) | | | | | | | |
| Film formability | ○ | ⊚ | ⊚ | ⊚ | ○ | × | ⊚ |

| | | | | | | | |
|---|---|---|---|---|---|---|---|
| * Parts by weight: Parts by weight relative to 100 parts by weight of the base material (A+B+C) | | | | | | | |

From the above results, it could be seen that the polyolefin resin compositions according to the present invention exhibited good properties in terms of adhesive strength to polar substrates (such as aluminum), heat resistance, electrolyte resistance, moldability (film formability), and the like.

Conversely, it could be seen that the polyolefin resin composition of Comparative Example 1 prepared using an insufficient amount of the propylene-ethylene-1-butene copolymer and excessive amounts of the ethylene-propylene elastomer and the propylene-ethylene elastomer suffered from deterioration in adhesive strength to polar substrates (such as aluminum), heat resistance, electrolyte resistance, and the like while exhibiting poor moldability (film formability), as compared to the polyolefin resin compositions of Examples; the polyolefin resin composition of Comparative Example 2 prepared using an excessive amount of the propylene-ethylene-1-butene copolymer and insufficient amounts of the ethylene-propylene elastomer and the propylene-ethylene elastomer suffered from deterioration in adhesive strength to polar substrates (such as aluminum), heat resistance, electrolyte resistance, and the like; and the polyolefin resin composition of Comparative Example 3 prepared using a propylene-ethylene random copolymer (A2) instead of the propylene-ethylene-1-butene copolymer according to the present invention suffered from deterioration in adhesive strength to polar substrates (such as aluminum), heat resistance, electrolyte resistance, and the like. In addition, it could be seen that the polyolefin resin composition of Comparative Example 4 prepared using an insufficient amount of the maleic anhydride-grafted polypropylene could not be bonded to the aluminum film when formed into a film, making it impossible to measure adhesive strength, heat resistance, or electrolyte resistance; and the polyolefin resin composition of Comparative Example 5 prepared using an excessive amount of the maleic anhydride-grafted polypropylene suffered from deterioration in adhesive strength to polar substrates (such as aluminum), heat resistance, electrolyte resistance, and the like while exhibiting poor moldability (film formability), as compared to the polyolefin resin compositions of Examples. In addition, it could be seen that the polyolefin resin composition of Comparative Example 6 prepared using an insufficient amount of the polyethylene resin exhibited poor properties in terms of adhesive strength to polar substrates (such as aluminum), heat resistance, electrolyte resistance, moldability (film formability), and the like; and the polyolefin resin composition of Comparative Example 7 prepared using an excessive amount of the polyethylene resin exhibited poor properties in terms of adhesive strength to polar substrates (such as aluminum), heat resistance, electrolyte resistance, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the invention. The scope of the invention should be defined by the appended claims rather than by the foregoing description, and the claims and equivalents thereto are intended to cover such modifications and the like as would fall within the scope of the invention.

## Claims

1. A polyolefin resin composition comprising:
about 100 parts by weight of a base material comprising about 65 wt% to about 90 wt% of a propylene-ethylene-1-butene copolymer, about 5 wt% to about 15 wt% of an ethylene-propylene elastomer, and about 5 wt% to about 20 wt% of a propylene-ethylene elastomer;
about 0.1 to about 10 parts by weight of a maleic anhydride-grafted polypropylene; and
about 5 to about 15 parts by weight of a polyethylene resin.

2. The polyolefin resin composition according to claim 1, wherein the propylene-ethylene-1-butene copolymer is a propylene-ethylene-1-butene random copolymer comprising about 85 mol% to about 98 mol% of a propylene-derived component, about 1 mol% to about 7 mol% of an ethylene-derived component, and about 1 mol% to about 8 mol% of a 1-butene-derived component

3. The polyolefin resin composition according to claim 1 or 2, wherein the propylene-ethylene-1-butene copolymer has a melt-flow index of about 0.1 g/10 min to about 20 g/10 min, as measured at 230°C under a load of 2.16 kg in accordance with ASTM D1238.

4. The polyolefin resin composition according to any one of claims 1 to 3, wherein the ethylene-propylene elastomer comprises about 65 wt% to about 85 wt% of an ethylene-derived component and about 15 wt% to about 35 wt% of a propylene-derived component.

5. The polyolefin resin composition according to any one of claims 1 to 4, wherein the ethylene-propylene elastomer has a melt-flow index of about 0.1 g/10 min to about 3 g/10 min, as measured at 190°C under a load of 2.16 kg in accordance with ASTM D1238.

6. The polyolefin resin composition according to any one of claims 1 to 5, wherein the propylene-ethylene elastomer comprises about 75 wt% to about 95 wt% of a propylene-derived component and about 5 wt% to about 25 wt% of an ethylene-derived component.

7. The polyolefin resin composition according to any one of claims 1 to 6, wherein the propylene-ethylene elastomer has a melt-flow index of about 5 g/10 min to about 15 g/10 min, as measured at 230°C under a load of 2.16 kg in accordance with ASTM D1238.

8. The polyolefin resin composition according to any one of claims 1 to 7, wherein the maleic anhydride-grafted polypropylene comprises about 0.5 wt% to about 5 wt% of a maleic anhydride-derived component.

9. The polyolefin resin composition according to any one of claims 1 to 8, wherein the polyethylene resin comprises at least one of low-density polyethylene (LDPE), linear low-density polyethylene (LLDPE), medium-density polyethylene (MDPE), or high-density polyethylene (HDPE).

10. The polyolefin resin composition according to any one of claims 1 to 9, wherein a weight ratio of the ethylene-propylene elastomer to the propylene-ethylene elastomer ranges from about 1:0.9 to about 1:2.

11. The polyolefin resin composition according to any one of claims 1 to 10, wherein the polyolefin resin composition has an adhesive strength (peel strength) of about 18 N/15 mm to about 25 N/15 mm, as measured on a specimen through a procedure in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×15 mm (length×width) and peeling the aluminum film and the layer of the polypropylene resin at a rate of 50 mm/min in accordance with ASTM D1876.

12. The polyolefin resin composition according to any one of claims 1 to 11, wherein the polyolefin resin composition has an adhesive strength (peel strength) of about 11 N/15 mm to about 24 N/15 mm, as measured on a specimen through a procedure in which the specimen is prepared by forming a bilayer film composed of a layer of the polyolefin resin composition and a layer of a polypropylene resin using a multilayer film forming machine and attaching the bilayer film to a nylon-attached aluminum film with the layer of the polyolefin resin composition adjoining the aluminum film, followed by heating to 200°C for 5 minutes, and in which the adhesive strength is measured by cutting the specimen to a size of 100 mm×25 mm (length×width), dipping the specimen in an organic electrolyte solution (1 M LiPF6 (EC:DMC:DEC = 1:1:1)) at 85°C for 24 hours, trimming both sides of the specimen to prepare a test piece with a length of 100 mm and a width of 15 mm, and peeling the aluminum film and the layer of the polypropylene resin at a rate of 50 mm/min in accordance with ASTM D1876.

13. The polyolefin resin composition according to any one of claims 1 to 12, wherein the polyolefin resin composition has a melt-flow index of about 0.1 g/10 min to about 15 g/10 min, as measured at 230°C under a load of 2.16 kg in accordance with ASTM D1238.

14. A molded article formed of the polyolefin resin composition according to any one of claims 1 to 13.
